# EUROPÄISCHE PATENTSCHRIFT

(11) **EP 1 309 397 B1**
(45) Veröffentlichungstag und Bekanntmachung des Hinweises auf die Patenterteilung: **02.02.2005**
(21) Anmeldenummer: 01969323.3
(22) Anmeldetag: 28.06.2001
(51) Int. Cl.: B01J 19/00, B01F 11/00

(54) **MIKROREAKTORANORDNUNG ZUR FESTPHASENGESTÜTZTEN SYNTHESE SOWIE MIKROREAKTORSYSTEM MIT EINZELNEN MIKROREAKTORANORDNUNGEN**
MICROREACTOR DEVICE FOR SOLID-PHASE SUPPORTED SYNTHESIS AND MICROREACTOR SYSTEM COMPRISING INDIVIDUAL MICROREACTOR DEVICES
DISPOSITIF DE MICROREACTEURS DESTINE A LA SYNTHESE EN PHASE SOLIDE ET SYSTEME DE MICROREACTEURS COMPORTANT DES DISPOSITIFS DE MICROREACTEURS INDIVIDUELS

(30) Priorität: 09.08.2000 DE 10039604; 21.11.2000 DE 10057827
(43) Veröffentlichungstag der Anmeldung: 14.05.2003
(73) Patentinhaber: Fraunhofer-Gesellschaft zur Förderung der angewandten Forschung e.V., 80686 München (DE)
(72) Erfinder: BREMUS-KÖBBERLING, Elke, 52070 Aachen (DE); KÖBBERLING, Johannes, 52070 Aachen (DE); ENDERS, Dieter, 52074 Aachen (DE); GILLNER, Arnold, 52159 Roetgen (DE)
(74) Vertreter: Grimm, Ekkehard, Dipl.-Phys.
(86) Internationale Anmeldenummer: PCT/EP2001/007376
(87) Internationale Veröffentlichungsnummer: WO 2002/011880

(56) Entgegenhaltungen:
- DE-A- 19 611 270
- US-A- 3 712 591
- US-A- 5 466 608
- US-A- 5 736 100

## Beschreibung

Die vorliegende Erfindung bezieht sich auf eine Mikroreaktoranordnung zur festphasengestützten Synthese mit mindestens einem Mikroreaktor, der einen Reaktionsraum mit mindestens einem Zulauf und einem Ablauf aufweist, wobei der Reaktionsraum zum Teil mit einem festen Trägermaterial gefüllt ist, wobei im Bereich des Zulaufs und des Ablaufs jeweils eine Fritte den Reaktionsraum abschließt und wobei über mindestens einen Einlaß Lösungsmittel und/oder Reagenzien zuführbar sind. Weiterhin betrifft die Erfindung ein Mikroreaktorsystem aus mehreren einzelnen Mikroreaktoren bzw. Mikroreaktoranordnungen. Schließlich ist die Erfindung auf ein Verfahren zum Durchführen einer festphasengestützten Synthese unter Einsatz einer Mikroreaktoranordnung oder eines Mikroreaktorsystems gerichtet.

Bei der Herstellung neuer Wirkstoffe, z.B. für pharmazeutische Produkte, werden zunehmend HTS-Methoden (High-Throughput-Screening) eingesetzt, um in kurzer Zeit eine große Bandbreite möglicher Wirkstoffe bezüglich ihrer Wirksamkeit zu testen. Eine Folge dieser neuen Techniken ist die Entwicklung der kombinatorischen Chemie, mit der schnell große Substanzbibliotheken für die Testung bereitzustellen sind. Die automatisierte, kombinatorische Synthese findet jedoch bisher noch in relativ großen Maßstäben statt (>2 ml, entsprechend 20 bis 100 mg Produkt.

Bei der Erzeugung der zu testenden Substanzen durch Methoden der kombinatorischen Chemie wird eine weitere deutliche Verkleinerung der Substanzmengen gefordert werden, wobei die bisher vorherrschenden technologischen Ansätze - die aus der klassischen Labortechnik abgeleitet sind - nur noch bedingt weiter verkleinerbar sind.

Inzwischen existiert eine Vielzahl von Systemen für die festphasengestützte Parallelsynthese von Wirkstoffen. Einige sind als Reaktionsblöcke für Vortex-Schüttler mit einem Reaktionsvolumen von 2 bis 5 ml ausgelegt. Für noch kleinere Mengen werden sogenannte Microcan's (Microcan ist eine Marke der Irori, San Diego, Kalifornien, USA) verwendet, die einzeln oder zu mehreren in konventionellen Kolben eingesetzt werden. Ihre Hauptnachteile sind neben dem hohen Preis der geringe Automatisierungsgrad, sowie die sehr langsame Diffusion von Reaktanden, was insbesondere beim Waschen von Harz nach vollendeter Reaktion einen enorm großen Lösungsmittelverbrauch (und Zeitbedarf) mit sich bringt.

Nach dem Stand der Technik werden zwei Agitationsverfahren, das Vortex-Schütteln und dasjenige mittels Magnetrührer, zur Agitation von Polymerharz-Suspensionen eingesetzt.

Beim Vortex-Schütteln muß der gesamte Reaktionsblock, inklusive aller Zu- und Ableitungen, Heiz- und Kühleinrichtungen, usw., fest auf einem Schüttler montiert werden; dies macht derartige Apparaturen groß und unhandlich. Außerdem können die von derartigen Schüttlern ausgehenden Vibrationen andere Laborgeräte (z.B. Waagen) stören.

Das Agitieren von Harzsuspensionen durch Magnetrührer ist problematisch, da Magnetrührkerne (insbesondere bei erhöhten Temperaturen) das Harz zermahlen, wodurch es unbrauchbar wird.

Für besser angepaßte Reaktionen und Synthesen werden neuartige Festphasenreaktoren mit Reaktorvolumen zwischen 0,2 und 2 ml Volumen - gegenüber konventionellen Systemen mit 5 bis 100 ml - eingesetzt, welche zur Synthese an 20 bis 200 mg Syntheseharz (quervernetztes Polystyrol) entsprechend ca. 1- 30 mg abgespaltenem Produkt geeignet sind.

Aufgabe der Erfindung ist es, eine Mikroreaktoranordnung so auszubilden, daß die vorstehend beschriebenen Nachteile, die sich insbesondere auf den Einsatz von Magnetrührern und Vortex-Schüttlern beziehen, vermieden werden. Weiterhin sollen ein entsprechendes Mikroreaktorsystem sowie ein Verfahren zum Durchführen von festphasengestützten Synthesen angegeben werden.

Die Aufgabe wird bei einer Mikroreaktoranordnung der eingangs genannten Art dadurch gelöst, daß einströmseitig der dem Zulauf zugeordneten Fritte eine flüssigkeits- und gasdichte Membran angeordnet ist, daß der Einlaß zwischen Membran und Fritte positioniert ist und daß auf der dem Reaktionsraum abgewandten Seite der Membran eine diese, in Form von oszillierenden Auslenkungen, bewegende Einrichtung vorgesehen ist.

Hinsichtlich eines Mikroreaktorsystems wird die Aufgabe durch ein solches gelöst, das aus einzelnen Mikroreaktoren, wie sie vorstehend angegeben sind, aufgebaut ist, die in einer Matrixform aus n Spalten und m Zeilen angeordnet sind, wobei n und m ganzzahlige Werte annehmen.

Aufgrund der flüssigkeits- und gasdichten Membran, die eingangsseitig der dem Zulauf zugeordneten Fritte angeordnet ist, wird erreicht, daß durch die oszillierende Auslenkung eine überstehende Harzsuspension schonend bewegt wird und es zu einer guten Durchmischung kommt.

Da der Einlaß zwischen Membran und Fritte positioniert ist, ist die Möglichkeit gegeben, Lösungsmittel und Reagenzien zum Harz dazu zu dosieren bzw. das Harz mit Lösungsmittel zu waschen.

Mit der sich in Form von oszillierenden Auslenkungen bewegenden Einrichtung, die auf der dem Reaktionsraum abgewandten Seite der Membran angeordnet ist, kann diese zu einer periodischen Auslenkung angeregt werden, die den Inhalt des Reaktionsraums bewegt und durchmischt.

Die erfindungsgemäße Mikroreaktoranordnung zeichnet sich somit insbesondere durch eine schonende Harzagitation und ein effizientes Waschen aus.

Aufgrund der kompakten Bauweise und der effektiven Durchmischung kleiner Volumina, bei denen der Vortex-Effekt von Vortex-Schüttlern nicht mehr zuverlässig erreichbar ist, können sehr kleine Substanzmengen eingesetzt werden.

Bevorzugt wird die Membran in Bezug auf das Volumen des Reaktionsraums derart ausgelegt, daß pro auslenkende Bewegung oder pro auslenkendem Hub der Membran 5 bis 50% des Volumens des Reaktionsraums verdrängbar sind und so die im Reaktionsraum enthaltende Flüssigkeit zur Spülung und/oder Agitation des im Reaktionsraum befindlichen Trägermaterials bewegbar ist.

Im Einsatz einer solchen Mikroreaktoranordnung wird zunächst der Reaktionsraum über die Zuleitungskapillare(n) gefüllt, dann wird zumindest der Zulauf mittels einer geeigneten Ventilanordnung verschlossen und die Membran wird dann zur Agitation verwendet.

Ein bevorzugtes Verdrängungsvolumen liegt im Bereich von 10 bis 25%, da gerade mit diesem Volumenanteil die gute Durchmischung gewährleistet werden kann, ohne eine unverhältnismäßig große Membran, die die kompakte Bauform stören würde, zu benötigen.

Um einerseits eine hohe Spül- und/oder Agitationswirkung zu erreichen, um aber andererseits keine Totvolumina zu erhalten, wird bevorzugt die Fläche der Membran so ausgestaltet, daß sie mindestens der Fläche des Durchmessers des Reaktionsraums entspricht.

Geeignete Materialien für die Membran sind Fluorpolymere, insbesondere PTFE, FEP und PFA. Solche Fluorpolymere zeichnen sich dadurch aus, daß sie chemisch inert sind und der mechanischen Belastung standhalten. PTFE ist der Vorzug zu geben, wenn die Fixierung der Membran mechanisch zu bewerkstelligen ist, während eine Membran aus FEP und PFA dann einzusetzen ist, wenn die Strukturen durch den Prozeß des Kunststoffschweißens aneinandergebondet werden müssen; dies kann mittels Laserstrahlung efolgen und kann insbesondere für die kleineren Volumina der Mikroreaktoranordnungen notwendig sein, was insbesondere auch dann erforderlich werden kann, wenn aus solchen Mikroreaktoranordnungen Mikroreaktorsysteme aufgebaut werden.

Für eine ausreichende Flexibilität einer solchen Membran aus Fluorpolymeren kann die Dicke bei 100 µm bis 500 µm liegen.

Die den Reaktionsraum eingangsseitig und/oder ausgangsseitig zugeordneten Fritten müssen für Flüssigkeiten durchlässig und für Trägermaterialien, beispielsweise Polymerharze, undurchlässig sein. Diese Maßnahme kann dann erforderlich sein, wenn im Reaktionsraum Harzpartikel oder Harzkügelchen eingesetzt sind, die dazu dienen, an ihnen polymer-gestützte, kombinatorische Chemie durchzuführen.

Fritten sind immer dann erforderlich, wenn nicht monolithische, makroporöse Polymerträger eingesetzt werden, oder das Trägermaterial in perforierter Polymerfolie kompoundiert ist.

Die jeweiligen Fritten sollten aus Polymermaterialien, insbesondere PTFE (Polytetrafluorethylen), PFA (Perfluoroalkoxyalkan-Copolymer), FEP (Tetrafluorethylen-Hexafluorpropylen-Copolymer), PP (Polypropylen) gebildet sein, mit einer offenen Porosität von 2 - 250 µm.

Die einzelnen Reaktoren können röhrenförmig sein und sind am Ein- und Ausgang jeweils mit einem Sieb bzw. einem Verschluß aus einem porösen Material (Fritte) - ausgestattet, um die darin befindlichen Kügelchen, die einen Durchmesser von 75 - 150 µm aufweisen sollten, aus funktionalisiertem Polystyrolharz zurückzuhalten. Alternativ können auch andere Füllungen verwendet werden, z.B. Trägermaterialien auf Kieselgelbasis, oder auch monolithische Polymer- oder Kieselgeleinsätze. In letzterem Fall kann auf die Siebe verzichtet werden.

Unter dem unteren Einlaß bzw. der unteren Fritte ist die Membran, vorzugsweise aus Teflon, angebracht. In einer einfach aufzubauenden und gut anzusteuernden Anordnung wird für die die Membran bewegende Einrichtung eine Druckluftanordnung gewählt, die durch abwechselndes Anlegen von Vakuum und Druckluft zwischen einem oberen und einem unteren Wendepunkt oszilliert und die darüberliegende Flüssigkeit periodisch in den Reaktionsraum mit dem Polymerharz hinein- und herauspumpt und dabei das Harz durchwirbelt.

Der Reaktionsraum zwischen den beiden Fritten sollte ein Volumen vorzugsweise im Bereich von 0,2 bis 2 ml aufweisen. Diese Mengen sind ausreichend, um mit den Mikroreaktoranordnungen festphasengestützte Synthesen durchzuführen, bei denen der Reaktionsraum zum Teil mit festem Trägermaterial gefüllt ist.

Dem Reaktionsraum kann eine Temperiereinrichtung, beispielsweise in Form einer

Heiz- und Kühleinrichtung, zugeordnet werden, um durch Wärmezu- oder -abfuhr die Reaktionsgeschwindigkeit und den Reaktionsablauf innerhalb des Reaktionsraums zu beeinflussen.

Hinsichtlich eines einfachen Aufbaus einer Heizeinrichtung und einer gleichmäßigen Beheizung kann der Reaktionsraum durch eine wärmeleitende Ummantelung umgeben werden, die mit einer solchen Heizeinrichtung beheizbar ist. Diese wärmeleitende Ummantelung kann darüber hinaus mit einer zusätzlichen Kühleinrichtung kühlbar sein, um schnelle Wärmewechselzyklen zu erreichen.

Es besteht die Möglichkeit zur optischen Online-Kontrolle, indem die ausfließenden Lösungen/Flüssigkeiten durch eine miniaturisierte Analysezelle, z.B. Fluoreszenzspektroskopie, geführt werden. Eine Inline-Analyse-Möglichkeit kann zusätzlich durch in die Reaktionsgefäße integrierte Lichtleitfasern oder optische Fenster realisiert werden, welche sich ebenfalls zur Durchführung von photochemischen Reaktionsschritten eignen.

Zumindest der Reaktionsraum bzw. die Reaktionskammer sollte aus Polypropylen, aus spritzgießbaren Hochleistungspolymeren, z.B. PEEK, PFA, usw., oder aus mit chemisch inerten Polymeren beschichteten, spritzgießbaren Metallen und Metallegierungen, z.B. Aluminium, hergestellt werden

Für die Anwendung in der kombinatorischen Mikrochemie werden mehrere dieser Reaktoren, wie sie vorstehend beschrieben sind, zu matritzenförmigen Reaktorsystemen zusammengefügt. Vorzugsweise sollte eine solche Matrix aus n Zeilen und m Spalten aufgebaut werden, mit vorzugsweise 4 x 6 oder 8 x 12 oder 16 x 24 Reaktoren, so daß Untersuchungsreihen mit 24, 96 oder 384 Synthesevorgängen durchgeführt werden können. Diese matritzenförmigen Reaktorsysteme für die kombinatorische Mikrochemie ermöglichen dann, entsprechend den n Reihen und m Zeilen, in denen die einzelnen Reaktoren angeordnet sind, die simultane Zuführung von 4 und 6 bzw. 8 und 12 oder 16 und 24 Ausgangsmaterialien, und zwar vorzugsweise über Kapillaren, die in mehreren Ebenen des Mikroreaktorsystems aufgebaut ist. Ein solcher Aufbau des Mikroreaktorsystems in Form einer Plattenstruktur aus einzelnen, plattenförmigen Schichten ermöglicht die Einarbeitung der Zu- und/oder Abführungskanäle sowie entsprechender Ventile eingangs- und/oder ausgangsseitig der einzelnen Mikroreaktoren. Solche plattenförmigen Teile können dann auch gegeneinander verschiebbar angeordnet werden, um Zu- und/oder Abläufe zu und von den einzelnen Reaktoren zu öffnen und zu schließen.

Für einen einfachen Aufbau werden die plattenförmigen Schichten, die die Kanäle, Ventile und Reaktionskammern aufnehmen, senkrecht zu den Achsen der Reaktionsräume geschichtet.

Weiterhin kann bei einem solchen Mikroreaktorsystem auf der Zulaufseite zu den einzelnen Reaktoranordnungen zumindest zeilenweise oder spaltenweise jeweils eine gemeinsame Gaszufuhr und/oder gemeinsame Zufuhr für Lösungsmittel und/oder Reagenzien vorgesehen sein, damit die einzelnen Mikroreaktoren, die einer Zeile oder Spalte in der Matrixanordnung zugeordnet sind, mit denselben Gasen, Lösungsmitteln und/oder Reagenzien gefüllt werden können.

Bei einem solchen Mikroreaktorsystem ergibt sich in einer konstruktiv einfachen Weise die Anordnung der Membranen in den jeweiligen Mikroreaktoren durch eine Membranfolie, die zwischen zwei Platten des geschichteten Aufbaus des Mikroreaktorsystems eingelegt ist. Demzufolge ist es in einem solchen Fall nicht erforderlich, daß jeder Mikroreaktor seine eigene Membranfolie erhält. Mit einem solchen Aufbau ist auch gewährleistet, daß die den einzelnen Mikroreaktoren zugeordneten Membranen jeweils vergleichbare Eigenschaften haben, d.h. vergleichbare Auslenkungen der jeweiligen Membranen führen zu vergleichbaren Füllvolumina in den Reaktionsräumen und zu vergleichbaren Agitationsbewegungen.

In einer Plattenstruktur, wie sie vorstehend angegeben ist, werden die einzelnen Reaktionsräume der einzelnen Mikroreaktoranordnungen durch Bohrungen in einer dieser plattenförmigen Schichten gebildet.

Für die Anwendung in der kombinatorischen Mikrochemie sind diese Reaktoren als matritzenförmige Reaktionssysteme aufgebaut, die die simultane Zuführung von 8 bzw. 12 Ausgangsmaterialien durch Kapillaren in mehreren Ebenen beispielsweise zu einer Matrix von 8 x 12 Reaktionskammern ermöglichen.

Neben der eigentlichen Pumpmembran können die Kapillaraustritte des Zuleitungssystems für Reagenzien so angebracht sein, daß diese zunächst durch darüberliegendes Material verschlossen sind. Wenn nun die unteren Schichten des Reaktors einschließlich der Teflon-Membran gegen die Schicht mit den Reaktionsräumen verschoben wird, so gelangen die Reaktionsräume über die Kapillaraustritte, so daß die Reagenzien zugeführt werden können.

Die Kapillaren bzw. Mikrokanäle werden aus Hochleistungskunststoffen, z.B. PEEK, PFA, usw., durch Laserablation oder spanende Bearbeitung und/oder durch Hochleistungsspritzguß gefertigt und mit IR-Lasern verschweißt.

Die Realisierung von Heizung und Kühlung kann auf zwei Weisen erfolgen, zum einen, indem die Reaktionsräume von einer wärmeleitenden Ummantelung, z.B. Aluminium oder Edelstahl, umgeben sind, die extern geheizt oder gekühlt wird, was auch elektrisch erfolgen kann, zum anderen ist es möglich, ein weiteres Kanalsystem in das die Reaktionsräume umgebende Material zu integrieren, das als Heiz/Kühlkreislauf dient und durch Wärmeleitung die Reagenzienkanäle und Reaktionskammern temperiert.

Der Auslaß der Reaktionsgefäße kann im Waschmodus über Schläuche in beliebige Auffanggefäße erfolgen.

Systeme, wie sie vorstehend angegeben sind, eignen sich auch hervorragend für festphasengestützte Synthesen in der Flüssigphase. So können Scavengerharze oder polymergebundene Reagenzien in den Reaktionskammern eingeschlossen sein, um im Durchflußmodus Synthesen zu betreiben. Für mehrstufige Synthesen sollte der Ausgang eines Reaktionsgefäßes mit dem Eingang eines weiteren verbindbar sein.

In einer Ausführungsform stellen diese Reaktionsräume eine Matte mit zylindrischen Ausbuchtungen dar, welche als ganzes mit dem darin gebrauchsfertig eingeschweißten Harz, das in an sich bekannter Weise für die Festphasensynthese von neuen Molekülen vorbereitet ist, ein für den einmaligen Gebrauch bestimmtes Verbrauchsmaterial ist.

Weiterhin kann ein Mikroreaktionssystem aufgebaut werden, dessen Auslässe der Reaktionsgefäße im Abspalt-Modus eine direkte Überführung der edukthaltigen Lösung über einen Adapter-Aufsatz in eine Standard-Mikrotiterplatte ermöglicht.

Gegenstand der Erfindung ist somit eine Mikroreaktoranordnung bzw. ein Mikroreaktorsystem zur festphasengebundenen Synthese von neuen Molekülen und Wirkstoffen, wobei folgende Merkmale verwirklicht werden können:
- Agitation mittels einer Membran
- das Trägermaterial, z.B. Polymerharz, ist in einem Reaktionsraum oder mehreren Reaktionsräumen (permeable Behälter) eingeschlossen, die jeweils einen Eingang und Ausgang haben, der aus einer Fritte besteht, die für Flüssigkeiten durchlässig ist, das Harz aber zurückhält;
- vor bzw. hinter diesen Fritten Ventile zur Zu- und Ableitung von mehreren Reagenzien und Lösungsmitteln vorhanden sind;
- die Reaktionsräume können aus einem chemisch inerten Material, wie Glas, polymer-beschichtetes Metall, Polypropylen, PEEK, PTFE, FEP oder PFA, etc., bestehen;
- die Reaktionsräume sind von einer wärmeleitenden Ummantelung, z.B. aus Aluminium, umschlossen;
- ein zweites Kanalsystem kann im die Reaktionsräume umgebenden Material vorhanden sein, das als Heiz/Kühlkreislauf dient und durch Wärmeleitung die Reagenzienkanäle und Reaktionskammern temperiert.

In der vorstehenden Beschreibung sind Mikroreaktoranordnungen mit Volumina der Reaktionsräume im Bereich von 0,1 bis 10 ml, vorzugsweise von 0,2 bis 2 ml, angegeben. Der prinzipielle Aufbau der Mikroreaktoren kann aber auch auf Reaktoren mit Volumina von bis zu einigen 100 ml übertragen werden, insbesondere im Hinblick auf die Membran, die zur Agitation eingesetzt wird. Weitere Einzelheiten und Merkmale der Erfindung ergeben sich aus der nachfolgenden Beschreibung von Ausführungsbeispielen anhand der Zeichnungen. In der Zeichnung zeigt:
- Figur 1: einen Schnitt durch eine einzelne Mikroreaktoranordnung;
- Figur 2: einen Schnitt durch zwei nebeneinander angeordnete Mikroreaktoranordnungen, die ein Mikroreaktorsystem bilden, wobei in dieser Figur die Bewegung der Membran verdeutlicht wird;
- Figur 3: eine Schnittdarstellung eines Mikroreaktorsystems mit vier einzelnen Mikroreaktoranordnungen, wobei hier der Mehrschichtaufbau deutlich wird;
- Figur 4: eine Ebene einer Schichtstruktur, im Bereich derer Ventile gebildet sind, indem zwei gegeneinander verschiebbare Schichten vorgesehen sind; und
- Figur 5: eine Ebene einer Schichtstruktur, aus der das Mikroreaktorsystem aufgebaut ist, wobei in dieser Schicht Zuleitungskapillaren gezeigt sind.

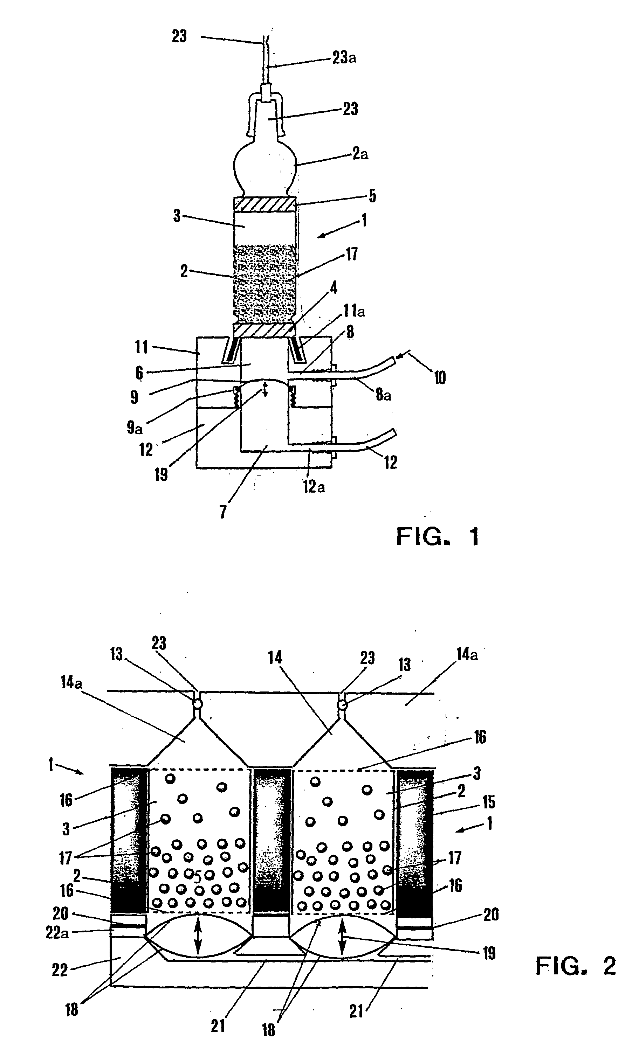

Figur 1 zeigt den prinzipiellen Aufbau einer Mikroreaktoranordnung 1 in einer Schnittebene entlang der Achse des Reaktionsbehälters 2. Der Reaktionsbehälter 2, der einen zylindrischen Innenraum aufweist, ist an seinem unteren Ende mit einer einlaufseitigen Fritte 4 und an seinem oberen Ende mit einer auslaufseitigen Fritte 5 verschlossen. Diese Fritten sind aus Polypropylen gebildet. Der Reaktionsbehälter 2 ist auf einem Grundkörper 11 aufgesetzt und gegenüber diesem Grundkörper 11 mittels einer Ringdichtung 11a abgedichtet. In dem Grundkörper 11 ist ein Zulaufkanal 6 ausgebildet, der einen Durchmesser aufweist, der etwa dem Innendurchmesser des Reaktionsraums 3 entspricht. An diesen Zulaufkanal 6 schließt sich nach unten ein unterer Zulauf 7 mit entsprechendem Querschnitt an, der in einem Einsatzteil 12 ausgebildet ist. Dieses Einsatzteil 12 ist in eine entsprechende Öffnung im unteren Bereich des Grundkörpers 11 eingeschraubt. Im Bereich der Verbindungsstelle zwischen Grundkörper 11 und Einsatzteil 12 ist eine Membran 9 eingelegt, die an ihrem Umfangsrand mittels einer O-Ringdichtung 9a abgedichtet ist. Diese Membran ist aus PTFE-Material gebildet. Sie ist hinsichtlich der Materialstärke so ausgelegt, daß sie in Richtung des Doppelpfeils 19 oszillieren kann.

In den Zulaufkanal 6, oberhalb der Membran 9, ist in den Grundkörper 11 ein seitlicher Zulaufkanal 8 ausgebildet, der als Reaganzien-Einlaß, durch den Strömungspfeil 10 angedeutet, dient. An der Außenseite ist der seitliche Zulauf 8 mit einer Teflon-Kapillare, mit dem Bezugszeichen 8a bezeichnet, verbunden.

Der untere Zulauf 7 ist mit einem Einlaßkanal 12a versehen; dieser Einlaßkanal 12a ist mit einer weiteren Teflon-Kapillare 12b verbunden. Über diese Teflon-Kapillare 12b kann in den unteren Zulauf 7 unterhalb der Membran 9 ein Hydraulikfluid zu- und abgeführt werden bzw. Druckluft und Vakuum angelegt werden.

An der Oberseite des Reaktorbehälters 2 ist ein sich verjüngender Anschlußstutzen 2a aufgesetzt, der einen Reaktorauslaß 23 bildet. Dieser Reaktorauslaß 23 wiederum ist mit einer Teflon-Kapillare 23a verbunden, die einen Verschluß mit Schlauchklemme 23b aufweist.

Der Grundkörper 11 ist aus Teflon gefertigt und das Einsatzteil 12 dieser Mikroreaktoranordnung 1 ist aus Edelstahl gefertigt, also aus Materialien, die chemisch gegen Säuren, Basen und Lösungsmittel resistent sind.

Zur festphasengestützten Synthese von Stoffen bzw. Reagenzien mittels dieser Mikroreaktoranordnung 1 der Figur 1 wird zunächst das Reagenz über die Teflon-Kapillare 8a und den seitlichen Zulauf 8 in den Vorraum 6 überführt. Über diesen seitlichen Zulauf 8 können auch zusätzlich Lösungsmittel in den Zulaufkanal 6 und in den Reaktionsraum 3 eingefüllt werden. Anschließend wird der seitliche Zulauf 8 über eine nicht näher dargestellte Ventilanordnung, oder eine einfache Klemmeinrichtung, an der Teflon-Kapillare 8a verschlossen. In dem Reaktionsraum 3 ist, etwa über zwei Drittel dessen Höhe, Polymerharz 17 eingefüllt, das über die eingangsseitige und ausgangsseitige Fritte 4, 5 in dem Reaktionsraum 3 zurückgehalten werden.

Nach der Befüllung des Reaktionsraums 3 mit den Reagenzien und Lösungsmitteln werden auf die Unterseite der Membran 9 Impulse über ein Gas oder eine Flüssigkeit, das bzw. die über die Teflon-Kapillare 12b, den Einlaßkanal 12a und den unteren Zulauf 7 zugeführt werden, aufgebaut. Durch diese impulsmäßige Beaufschlagung der Membran 9 mit einem Gas oder einer Flüssigkeit wird die Membran 9 in oszillierende Bewegungen in Richtung des Doppelpfeils 19 versetzt, so daß die darüberliegende Flüssigkeit periodisch in den Reaktionsraum mit dem Polymerharz hinein- und herausgepumpt wird und das Harz durchwirbelt. Nach Abschluß dieses Durchmischungsvorgangs können dann die sich in dem Zulaufkanal 6 und dem Reaktionsraum 3 befindlichen Substanzen über den Anschlußstutzen 8a, den Reaktorauslaß 23 und die Teflon-Kapillare 23a entnommen werden, indem die Schlauchklemme 23b geöffnet wird und über die Teflon-Kapillare 8a und den seitlichen Zulauf 8 Spülflüssigkeit eingefüllt wird oder mittels Schutzgas-(Ar, N₂)-Druck herausgedrückt wird.

Um die Leistungsfähigkeit einer solchen Mikroreaktoranordnung 1 zu überprüfen, wurden Tests wie folgt durchgeführt:

Stark quellendes Harz, das unter der Bezeichnung Merrifield von der Firma Polymer Labs erhältlich ist, bei dem es sich um ein 1% vernetztes Polystyrol-Harz handelt, wurde mit Sudan-Rot in Dichlormethan (DCM) gefärbt und in den Reaktionsraum 3 eingefüllt. Das Volumen des verwendeten Reaktorbehälters 2 betrug etwa 1,5 ml. Anschließend wurde die Membran 9 mit einer Frequenz von 1 - 2 Hz oszilliert unter abwechselndem Anlegen von Druckluft und Vakuum an die Membran, und zwar über den unteren Zulauf 7. Das Waschen wurde vorgenommen, indem Dichloromethan über die Teflon-Kapillare 8a zugeführt wurde, und zwar in einer Menge von 10 ml über eine Zeitdauer von 10 Sekunden in einer ersten Stufe und dann Zuführen von Methanol durch die Harzkügelchen 17 in einer zweiten Stufe, wiederum über die Teflon-Kapillare 8a. Nach zwei solcher Zyklen, während denen jeweils 10 ml DCM und MeOH zugeführt wurde unter gleichzeitiger Agitation mittels der Membran 9, war das Harz farblos. In einem dritten Waschzyklus wurde die über das Harz geführte Flüssigkeit (Methanol) gesammelt und auf Restbestandteile des Farbstoffes Sudan-Rot überprüft, indem diese Waschflüssigkeit vollständig verdampft wurde. Restbestandteile von Sudan-Rot konnten nicht nachgewiesen werden. Der gesamte Vorgang benötigte insgesamt zwei Minuten mit folgenden Zyklen:
- 10 ml DCM - 20 Sekunden Agitation
- 10 ml MeOH - 20 Sekunden Agitation
- 10 ml DCM - 20 Sekunden Agitation
- 20 ml MeOH - 20 Sekunden Agitation

Zur Vergleichsmessung wurde ein solcher Waschvorgang mit denselben Substanzen in einem Vortex-Schüttler durchgeführt. Erst nach vier Waschzyklen mit den entsprechenden Mengen an Waschflüssigkeit und insgesamt 20 Minuten konnte ein annähernd vergleichbares Ergebnis erreicht werden.

Diese Versuchsmessungen belegen, daß mit der in Figur 1 gezeigten Mikroreaktoranordnung der gesamte Vorgang um etwa einen Faktor 10 verglichen mit einem herkömmlichen Vortex-Schüttler verkürzt werden kann.

Basierend auf dem Prinzip der einzelnen Mikroreaktoranordnung 1, wie sie in Figur 1 dargestellt ist, können Mikroreaktorsysteme aufgebaut werden, die aus einer Anzahl einzelner Mikroreaktoren 1 bestehen. Ein Beispiel eines solchen Mikroreaktorsystems, zwei Reaktorbehälter 2 umfassend, ist in Figur 2 dargestellt. Die jeweiligen Reaktionsräume 3 dieser Reaktorbehälter 2 sind in Form von mit inerten Polymeren beschichteten Bohrungen in einer Aluminiumplatte 15 gebildet. Auch bei dieser Aluminiumplatte 15 ist auf der Oberseite eine PFA-Oberseitenplatte 14 aufgesetzt mit jeweils einer trichterförmigen Ausnehmung 14a, die in einem Reaktorauslaß 23 übergeht, in dem jeweils ein schematisch angedeutetes Auslaßventil 13 integriert ist. Unterhalb der Aluminiumplatte 15 befindet sich eine Zwischenplatte 22a, die ihrerseits von einer Bodenplatte 22 abgedeckt ist.

Zwischen der Aluminiumplatte 15 und der Oberseitenplatte 14 sowie zwischen der Aluminiumplatte 15 und der Zwischenplatte 22a ist jeweils eine poröse Schicht (Sieb bzw. Fritte) 16 aus PFA, PTFE oder PP eingesetzt, das eine Maschenweite derart aufweisen, daß die Harzkügelchen 17 in dem Reaktionsraum 3 des Reaktionbehälters 2 gehalten werden. Bei diesen Sieben 16 kann es sich um ein durchgehendes, in der jeweiligen Schicht angeordnetes Netz handeln, das mit der Oberseitenplatte 14 bzw. der Zwischenplatte 22a, die jeweils aus PFA, PTFE oder PP hergestellt sind, verschweißt sein kann derart, daß die einzelnen Reaktorbehälter 2 gegeneinander gedichtet sind.

In der Ebene zwischen der Zwischenplatte 22a und der Bodenplatte 22, die ebenfalls aus PFA, PTFE, FEP, PEEK oder beschichtetem Aluminium besteht, ist eine Folie eingelegt, die die jeweiligen Membran 18 bildet, die die Reaktionsräume 3 auf der Zulaufseite abschließen. Oberhalb dieser Membran 18 sind jeweilige Kapillar-Einlässe, mit dem Bezugszeichen 20 bezeichnet, vorgesehen, die dem seitlichen Zulauf 8 der Mikroreaktoranordnung der Figur 1 entsprechen. Unterhalb der Membran 18 sind in der PFA-Bodenplatte 22 Einlaßkanäle 21 zu sehen, die den Einlaßkanälen 12a der Mikroreaktoranordnung 1 der Figur 1 entsprechen. Die Membran kann wahlweise eingeklemmt oder mit der Zwischenplatte 22a oder mit der Bodenplatte 22 verschweißt sein.

Um die Kapillar-Einlässe 20 und die Einlaßkanäle 21 auszubilden, können die Zwischenplatte 22a und/oder die Bodenplatte 22 aus jeweils zwei Platten aufgebaut werden, wobei in der Trennebene zwischen diesen zwei Teilplatten die jeweiligen Kanäle geformt werden.

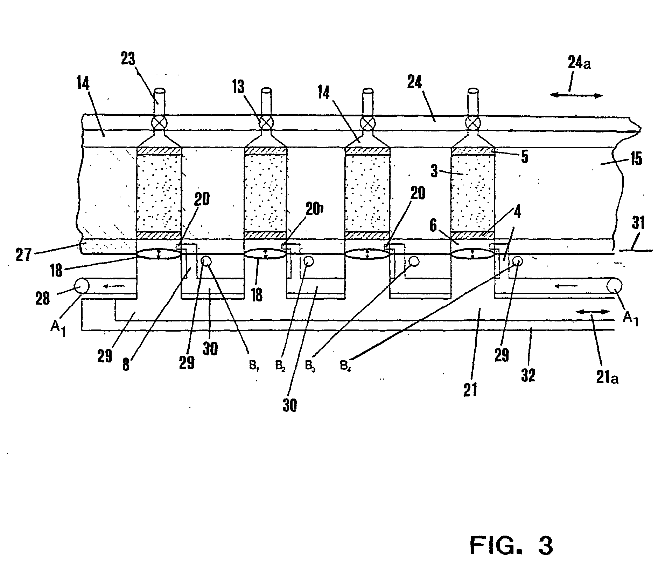

Ein linear gezeichnetes, sich aber dreidimensional ausdehnendes Mikroreaktorsystem (schematisch für eine n x m Matrix unter Zugrundelegung des prinzipiellen Aufbaus der Figuren 1 und 2 ist in weiterem Detail in Figur 3 gezeigt. Diese Anordnung umfaßt, entsprechend Figur 2, einen plattenförmigen Aufbau mit n x m vier Reaktionsräumen 3, von denen vier in der Skizze gezeigt sind, die wiederum durch Bohrungen in einer Fluorpolymer- bzw. Aluminiumplatte 15 gebildet sind. Im oberen und unteren Bereich der Reaktionsräume 3 sind jeweils Fritten 4, 5 eingesetzt, die eine solche Porosität aufweisen, daß sie die in die Reaktionsräume 3 eingefüllten Harzkügelchen im Reaktionsraum 3 zurückhalten.

Soweit die Bauteile der Anordnung der Figur 3 mit den Bauteilen der Anordnung der Figur 2 identisch oder mit diesen vergleichbar sind, sind in Figur 3 dieselben Bezugszeichen wie in Figur 2 verwendet.

Zusätzlich zu der Anordnung der Figur 2 ist oberhalb der Oberseitenplatte 14 eine zusätzliche Ventilplatte 24 aufgelegt, die in Richtung des Doppelpfeils 24a verschiebbar ist. Durch diese Verschiebung in Richtung des Doppelpfeils 24a können die jeweiligen Ventilöffnungen 13 so orientiert werden, daß sie einen Durchgang zwischen den trichterförmigen Ausnehmungen 14a und den Reaktorauslässen 23 bilden, während sie in einer dazu verschobenen Stellung den Durchgang unterbrechen. Somit können durch Betätigung dieser Ventilplatte 24 alle Reaktorauslässe 23 geöffnet oder verschlossen werden. Auf der Unterseite der Aluminiumplatte 15 schließt sich eine Membranhalteschicht 27 an, an der die Membran 18 verschweißt ist, in der auch die Kapillar-Einlässe 20 in dem Bereich oberhalb der Membran 18 ausgeführt sind. In der darunterliegenden Schicht 28 sind die vertikalen Zulaufkanäle, vergleichbar mit den Kanälen 8 der Anordnung der Figur 1, angeordnet, die in einer Zulaufschicht mit einem gemeinsamen, horizontal verlaufenden Verbindungskanal 30 in Verbindung stehen. Dieser gemeinsame Verbindungskanal 30 ist an seinen Zulaufenden mit A₁ bezeichnet.

In der Zulaufschicht sind neben den Zuläufen 8 bzw. dem Verbindungskanal 30 jeweils weitere Einlässe zu sehen, die zum einen mit dem Bezugszeichen 29 bezeichnet und darüber hinaus mit den Buchstaben B₁, B₂, B₃ und B₄ benannt sind. Diese weiteren Einlässe 29 führen ebenfalls über die Membranhalteschicht 27 in die Vorräume 6; sie sind zu den Zuläufen 8 versetzt angeordnet. Durch Verschieben der Platten 27 und 28 gegeneinander in unterschiedlichen Richtungen können die Vorräume 6 unterhalb der Reaktionsräume 3 entweder mit den Zuläufen 8 oder den Zuläufen 29 in Verbindung gebracht werden oder ganz geschlossen werden. Es ist aber auch eine diagonale Verschiebung der Platten gegeneinander so möglich, daß der Vorraum 6 gleichzeitig mit beiden Kanälen 8 und 29 in Verbindung gebracht werden kann, um unterschiedliche Reagenzien, Substanzen und/oder Lösungsmittel in den Bereich des Vorraums 6 und dem Reaktionsraum 3 einzubringen. Eine solche Verschiebemöglichkeit ist allgemein mit dem Doppelpfeil 31 gekennzeichnet.

Schließlich ist in Figur 3 unterhalb der Zulauf-Kapillarschicht 28 eine Grundplatte 32 vorgesehen, in der die gemeinsamen Einlaßkanäle 21, um ein Bewegungsfluid auf die Membranen 18 aufzubringen, ausgebildet sind. Durch dieses gemeinsame Kanalsystem 21 werden alle Membranen 18 in gleicher Weise mit einem Bewegungsfluid beaufschlagt, um diese Membranen in eine oszillierende Bewegung zu versetzen. Neben einer geeigneten Flüssigkeit kann dem Kanalsystem 21 über das Einlaufende, mit 21a bezeichnet, auch ein Gas, beispielsweise Druckluft/Vakuum zugeführt werden. Gas hat, im Gegensatz zu einer Flüssigkeit, den Vorteil, daß ohne externen Antrieb durch ein 3-Wege-Ventil das Gas entsprechend geführt werden kann.

Wie die Figur 3 verdeutlicht, ist aufgrund des schichtförmigen Aufbaus die Möglichkeit gegeben, Mikroreaktorsysteme aus einer großen Anzahl von Mikroreaktoranordnungen, die Volumina der Reaktionsräume mit Mengen von 0,1 bis 1,5 ml haben können, aufzubauen. Während die Figur 3 eine lineare Anordnung mit nur 4 Mikroreaktoranordnungen 1 zeigt, sind Matrixfelder möglich, die in der Größe praktisch nicht begrenzt sind, d.h. Felder von bis zu 16 x 24 oder mehr sind möglich, so daß sich im letzten Fall insgesamt 384 Reaktionsräume ergeben. Solche Mikroreaktorsysteme sind somit beliebig in der Größe und Anzahl auslegbar, ohne daß sich dadurch ein wesentlich erhöhter, konstruktiver Aufbau ergibt.

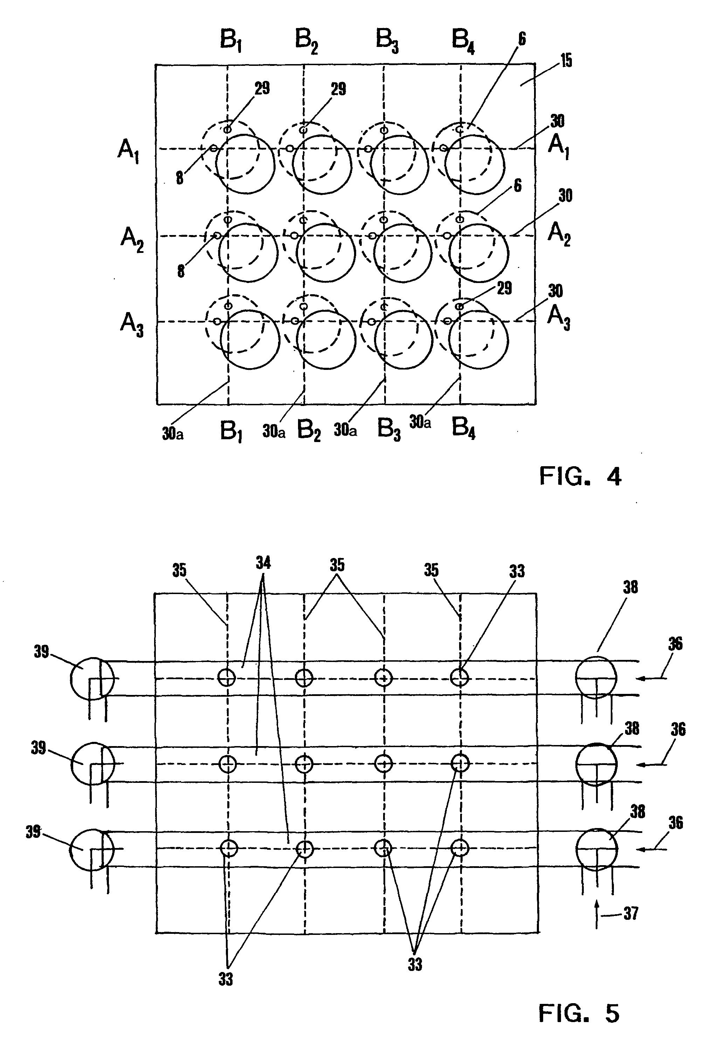

In Figur 4 ist eine Grundplatte 15 gezeigt, wobei die jeweiligen durchgezogenen Kreise die Lage der Reaktionsräume 3 angeben. Die Kreise in unterbrochener Linie zeigen die Lage der Zulaufkapillarschicht mit den jeweiligen Vorraumquerschnitten 6. Im Bereich dieser Vorräume 6 enden jeweils die seitlichen Zuläufe 8, die mit einem jeweiligen Verbindungskanal 30 gemeinsam in Verbindung stehen, sowie die jeweiligen Einlässe 29, die mit einem jeweiligen Verbindungskanal 30a in Verbindung stehen. Wie anhand der Figur 4 zu erkennen ist, sind die jeweiligen Zuläufe 8 der einer Reihe zugeordneten Reaktionsräume 3 mit einem gemeinsamen Zulaufkanal 30 verbunden, während die Einlässe 29 der jeweils in einer Spalte angeordneten Reaktionsräume 3 mit einem gemeinsamen Zulaufkanal 30a verbunden sind. Anhand der schematischen Darstellung der Figur 4 ist zu erkennen, daß je nach Verschieberichtung der Platte 15 und der darunterliegenden Membranhalteschicht 27 entweder die jeweiligen Zuläufe 8 oder die jeweiligen Einlässe 29 mit dem Reaktionsraum 3 in Verbindung gebracht werden können, oder aber, beispielsweise durch eine diagonale Verschiebung der Platten gegeneinander, beide Zuläufe mit den Reaktionsräumen 3 verbindbar sind. Entsprechend können durch eine Verschiebung in entgegengesetzter Richtung die Zuläufe hinsichtlich deren Verbindung mit den Reaktionsräumen unterbrochen werden.

In der Figur 5 ist nun eine Platte gezeigt, bei der es sich um eine Platte handeln kann, die die Schicht 28 in Figur 3 bildet. Mit dem Bezugszeichen 33 (bzw. 8 in Figur 3) sind jeweils Zuläufe, die beispielsweise einen Durchmesser von 100 µm haben können, bezeichnet. Die Zuläufe 33, die einem jeweiligen Reaktionsraum zugeordnet sind, sind jeweils reihen- oder zeilenweise mit einem Zulauf-Querkanal 34 (entspricht dem Zulaufkanal 30 in Figur 3) verbunden, dessen Breite vorzugsweise 400 µm beträgt. Senkrecht zu diesen Zulauf-Querkanälen 34 sind Zulauf-Längskanäle 35 angedeutet, die in einer darunterliegenden Schicht ausgebildet sind und mit den Zuläufen 29 in Figur 3 in Verbindung stehen. Jeder der Zulauf-Querkanäle 34 besitzt auf seiner Einlaßseite ein Ventil 38 und auf seiner Auslaßseite ein Ventil 39. Bei den Ventilen 38 handelt es sich um Dreiwegeventile, während die Ventile 39 einfache Absperrventile sind. Über die Dreiwegeventile 38 kann zwischen einem Zulauf 36 für Reagenzien und einem Zulauf 37 für Reagenzien oder Argon umgeschaltet werden. Über diese Ventile 38 können somit zwei verschiedene Reagenzien den jeweiligen Reaktionsräumen einer Zeile zugeführt werden. Die Zuführung von Argon über den Zulauf 37 kann dann erforderlich sein, wenn die Reaktoren entleert werden sollen. Zum Entleeren oder Spülen der Kapillaren können die Absperrventile 39 geöffnet und/oder verschlossen werden. Eine entsprechende Kanalanordnung, wie sie in Figur 4 zu sehen ist, die den Reaktionsräumen der Mikroreaktoranordnungen einer Zeile zugeordnet sind, können in entsprechender Weise, ebenfalls mit den Ventilen einlaufseitig und auslaufseitig, den Zulauf-Längskanälen 35 in einer darunter oder darüberliegenden Ebene zugeordnet werden. Anhand der schematischen Darstellung der Figur 5 ist ersichtlich, daß mit einfachen Mitteln und unter einem relativ geringen, konstruktiven Aufwand Reagenzien synchron zeilen- und spaltenweise mehreren Mikroreaktoren einer Matrix für eine kombinatorische Synthese zugeführt werden können.

## Patentansprüche

1. Mikroreaktoranordnung zur festphasengestützten Synthese mit mindestens einem Mikroreaktor, der einen Reaktionsraum mit mindestens einem Zulauf und einem Ablauf aufweist, wobei der Reaktionsraum zum Teil mit einem festen Trägermaterial gefüllt ist, wobei im Bereich des Zulaufs und des Ablaufs jeweils eine Fritte den Reaktionsraum abschließt und wobei über mindestens einen Einlaß Lösungsmittel und/oder Reagenzien zuführbar sind, **dadurch gekennzeichnet,**
**daß** einströmseitig der dem Zulauf (6; 20) zugeordneten Fritte (4; 16) eine flüssigkeits- und gasdichte Membran (18) angeordnet ist,
**daß** der Einlaß (6; 20) zwischen Membran (18) und Fritte (4; 16) positioniert ist und
**daß** auf der dem Reaktionsraum (3) abgewandten Seite der Membran (18) eine diese, in Form von oszillierenden Auslenkungen, bewegende Einrichtung vorgesehen ist.

2. Mikroreaktoranordnung nach Anspruch 1, **dadurch gekennzeichnet, daß** die Membran (18) in Bezug auf das Volumen des Reaktionsraums (3) derart ausgelegt ist, daß pro auslenkende Bewegung oder Hub der Membran (18) 5 bis 50% des Volumens des Reaktionsraums (3) verdrängbar sind und so die im Reaktionsraum (3) enthaltende Flüssigkeit zur Spülung und/oder Agitation des im Reaktionsraum (3) befindlichen Trägermaterials (17) bewegbar ist.

3. Mikroreaktoranordnung nach Anspruch 2, **dadurch gekennzeichnet, daß** 10 bis 25% des Volumens verdrängbar ist.

4. Mikroreaktoranordnung nach Anspruch 1, **dadurch gekennzeichnet, daß** die Fläche der Membran (18) mindestens der Fläche des Durchmessers des Reaktionsraums (3) entspricht.

5. Mikroreaktoranordnung nach Anspruch 1 **dadurch gekennzeichnet, daß** die Membran (18) aus Fluorpolymeren, insbesondere PTFE, FEP oder PFA gefertigt ist.

6. Mikroreaktoranordnung nach Anspruch 5, **dadurch gekennzeichnet, daß** die Dicke der Membran (18) 100 µm - 500 µm beträgt.

7. Mikroreaktoranordnung nach Anspruch 1, **dadurch gekennzeichnet, daß** im Bereich des Zulaufs (6; 20) und/oder des Ablaufs (23) des Reaktionsraums (3) jeweils ein Ventil (23b) angeordnet ist.

8. Mikroreaktoranordnung nach Anspruch 1, **dadurch gekennzeichnet, daß** die Fritten (4, 5; 16) für Flüssigkeiten durchlässig und für Polymerharze undurchlässig sind.

9. Mikroreaktoranordnung nach Anspruch 8, **dadurch gekennzeichnet, daß** die Fritten (4, 5; 16) aus Polymermaterialien, insbesondere PTFE (Polytetrafluorethylen), PFA (Perfluoroalkoxyalcan-Copolymer), FEP (Tetrafluorethylen-Hexafluorpropylen-Copolymer), PP (Polypropylen) gebildet sind, mit einer offenen Porosität von 2 - 250 µm.

10. Mikroreaktoranordnung nach Anspruch 1, **dadurch gekennzeichnet, daß** die die Membran (18) bewegende Einrichtung wechselweise auf die Membran (18) Gasdruck aufbringt und Vakuum anlegt.

11. Mikroreaktoranordnung nach Anspruch 1, **dadurch gekennzeichnet, daß** zumindest der Reaktionsraum (3) aus einem polymeren Material, insbesondere aus PTFE, PFA, FEP und PP, gebildet ist.

12. Mikroreaktoranordnung nach Anspruch 1, **dadurch gekennzeichnet, daß** der Reaktionsraum (3) zwischen den beiden Fritten (4, 5) ein Volumen im Bereich von 0,1 bis 10 ml, vorzugsweise 0,2 bis 2 ml, aufweist.

13. Mikroreaktoranordnung nach Anspruch 1, **dadurch gekennzeichnet, daß** dem Reaktionsraum (3) eine Heizeinrichtung zugeordnet ist.

14. Mikroreaktoranordnung nach Anspruch 13, **dadurch gekennzeichnet, daß** der Reaktionsraum (3) durch eine wärmeleitende Ummantelung umgeben ist, die mit der Heizeinrichtung beheizbar ist.

15. Mikroreaktoranordnung nach Anspruch 14, **dadurch gekennzeichnet, daß** die wärmeleitende Ummantelung mit einer Kühleinrichtung kühlbar ist.

16. Mikroreaktoranordnung nach Anspruch 1, **dadurch gekennzeichnet, daß** in der Wand des Reaktionsraums (3) das Ende einer Lichtleitform integriert ist.

17. Mikroreaktoranordnung nach Anspruch 1, **dadurch gekennzeichnet, daß** in der Wand des Reaktionsraums (3) ein optisches Fenster integriert ist.

18. Mikroreaktorsystem mit einzelnen Mikroreaktoranordnungen (1), wie sie in einem der Ansprüche 1 bis 17 beansprucht sind, die in einer Matrixform aus n Spalten und m Zeilen angeordnet sind, wobei n und m ganzzahlige Werte annehmen.

19. Mikroreaktorsystem nach Anspruch 18, **dadurch gekennzeichnet, daß** die Mikroreaktoranordnungen (1) in eine Plattenstruktur aus einzelnen plattenförmigen Schichten (14, 15, 22, 24, 27, 28) eingearbeitet sind, die senkrecht zu den Achsen der Reaktorräume geschichtet sind.

20. Mikroreaktorsystem nach Anspruch 18, **dadurch gekennzeichnet, daß** auf der Zulaufseite zu den einzelnen Reaktoranordnungen (1) zumindest zeilenweise oder spaltenweise jeweils eine gemeinsame Gaszufuhr und/oder gemeinsame Zufuhr für Lösungsmitteln und/oder Reagenzien vorgesehen ist.

21. Mikroreaktorsystem nach Anspruch 18, **dadurch gekennzeichnet, daß** die jeweiligen Membranen (18) der einzelnen Mikroreaktoranordnungen durch eine zwischen zwei Platten angeordnete Membranfolie gebildet sind.

22. Mikroreaktorsystem nach Anspruch 18, **dadurch gekennzeichnet, daß** die Ventile im Bereich des Zulaufs und/oder des Ablaufs jeweils durch zwei verschiebbare Platten gebildet sind, die jeweils einem Mikroreaktor zugeordnete Ventilöffnungen aufweisen, die in einer Stellung der Platten zueinander einen Durchfluß freigeben und in einer anderen Stellung der beiden Platten zueinander einen Durchfluß sperren.

23. Mikroreaktorsystem nach Anspruch 18, **dadurch gekennzeichnet, daß** die Reaktionsräume (3) der einzelnen Mikroreaktoranordnungen (1) durch Bohrungen in einer plattenförmigen Schicht (15) gebildet sind.

## Claims

1. A microreactor device for solid-phase supported synthesis, comprising at least one microreactor including a reaction chamber having at least one inflow and one outflow, the reaction chamber being partly filled with a solid support material, a respective frit closing the reaction chamber in the region of the inflow and the outflow, and solvents and/or reagents being adapted to be supplied via at least one inlet, **characterized in**
**that** a liquid- and gas-tight membrane (18) is arranged on the inlet side of the frit (4; 16) assigned to the inflow (6; 20),
**that** the inlet (6; 20) is positioned between membrane (18) and frit (4; 16), and
**that** a device is provided on the side of the membrane (18) facing away from the reaction chamber (3), the device moving the membrane in the form of oscillating deflections.

2. The microreactor device according to claim 1, **characterized in that** the membrane (18) is configured in relation to the volume of the reaction chamber (3) such that 5% to 50% of the volume of the reaction chamber (3) can be displaced per deflecting movement or lift of the membrane (18) and the liquid contained in the reaction chamber (3) can thereby be moved for flushing and/or agitating the support material (17) contained inside the reaction chamber (3).

3. The microreactor device according to claim 2, **characterized in that** 10% to 25% of the volume can be displaced.

4. The microreactor device according to claim 1, **characterized in that** the area of the membrane (18) corresponds at least to the area of the diameter of the reaction chamber (3).

5. The microreactor device according to claim 1, **characterized in that** the membrane (18) is made from fluoropolymers, particularly PTFE, FEP or PFA.

6. The microreactor device according to claim 5, **characterized in that** the thickness of the membrane (18) is 100 µm to 500 µm.

7. The microreactor device according to claim 1, **characterized in that** a valve (23b) is respectively arranged in the region of the inflow (6; 20) and/or the outflow (23) of the reaction chamber (3).

8. The microreactor device according to claim 1, **characterized in that** the frits (4, 5; 16) are permeable to liquids and impermeable to polymer resins.

9. The microreactor device according to claim 8, **characterized in that** the frits (4, 5; 16) are formed from polymer materials, particularly PTFE (polytetrafluoroethylene), PFA (perfluoroalkoxyalkane copolymer), FEP (tetrafluoroethylenehexafluoropropylene copolymer), PP (polypropylene), with an open porosity of 2-250 µm.

10. The microreactor device according to claim 1, **characterized in that** the device moving the membrane (18) alternatingly applies gas pressure and vacuum to the membrane (18).

11. The microreactor device according to claim 1, **characterized in that** at least the reaction chamber (3) is formed from a polymeric material, particularly from PTFE, PFA, FEP and PP.

12. The microreactor device according to claim 1, **characterized in that** the reaction chamber (3) between the two frits (4, 5) has a volume ranging from 0.1 ml to 10 ml, preferably from 0.2 ml to 2 ml.

13. The microreactor device according to claim 1, **characterized in that** a heating means is assigned to the reaction chamber (3).

14. The microreactor device according to claim 13, **characterized in that** the reaction chamber (3) is surrounded by a heat-conducting jacket which can be heated with the heating means.

15. The microreactor device according to claim 14, **characterized in that** the heat-conducting jacket can be cooled with a cooling means.

16. The microreactor device according to claim 1, **characterized in that** the end of a light-conducting form is integrated into the wall of the reaction chamber (3).

17. The microreactor device according to claim 1, **characterized in that** an optical window is integrated into the wall of the reaction chamber (3).

18. A microreactor system comprising individual microreactor devices (1) as claimed in any one of claims 1 to 17, which are arranged in a matrix form consisting of n columns and m lines, wherein n and m assume integer values.

19. The microreactor system according to claim 18, **characterized in that** the microreactor devices (1) are incorporated into a plate structure of individual plate-shaped layers (14, 15, 22, 24, 27, 28) which are stacked in a direction perpendicular to the axes of the reactor chambers.

20. The microreactor system according to claim 18, **characterized in that** a joint gas supply and/or joint supply for solvents and/or reagents is respectively provided on the inflow side to the individual reactor devices (1) at least in lines or columns.

21. The microreactor system according to claim 18, **characterized in that** the respective membranes (18) of the individual microreactor devices are formed by a membrane foil arranged between two plates.

22. The microreactor system according to claim 18, **characterized in that** the valves are each formed by two displaceable plates in the region of the inflow and/or the outflow, each of the plates having valve openings which are assigned to a microreactor and which release a flow passage in one position of the plates relative to one another and block a flow passage in another position of the two plates relative to one another.

23. The microreactor system according to claim 18, **characterized in that** the reaction chambers (3) of the individual microreactor devices (1) are formed by holes in a plate-like layer (15).

## Revendications

1. Disposition de microréacteur destiné à la synthèse en phase solide avec au moins un microréacteur qui présente une chambre de réaction avec au moins une arrivée et une évacuation, la chambre de réaction étant remplie en partie d'un matériau porteur solide, une fritte fermant la chambre de réaction et au moins des solvants et/ou des substances réactives étant intraduisibles par une entrée dans la zone de l'arrivée et de l'évacuation, **caractérisé en ce que**
dans le sens du courant de la fritte (4, 16) associée à l'arrivée (6 20), il est disposé une membrane (18) étanche au gaz et au liquide,
**en ce que** l'entrée (6; 20) est positionnée entre la membrane (18) et la fritte (4; 16) et
**en ce que** sur le côté de la membrane (18) détourné de la chambre de réaction (3), il est prévu un dispositif la déplaçant sous forme de déviations oscillantes.

2. Dispositif de microréacteur selon la revendication 1, **caractérisé en ce que** la membrane (18) est réalisée par rapport au volume de la chambre de réaction (3) de sorte que par mouvement dévié ou course de la membrane (18) 5 à 50 % du volume de la chambre de réaction sont refoulables et ainsi le liquide contenu dans la chambre de réaction (3) pour le nettoyage et/ou l'agitation du matériau porteur (17) contenu dans la chambre de réaction (3) est mobile.

3. Dispositif de microréacteur selon la revendication 2, **caractérisé en ce que** 10 à 25 % du volume sont refoulables.

4. Dispositif de microréacteur selon la revendication 1, **caractérisé en ce que** la surface de la membrane (18) correspond au moins à la surface du diamètre de la chambre de réaction (3).

5. Dispositif de microréacteur selon la revendication 1, **caractérisé en ce que** la membrane (18) est réalisée en polymère fluoré, en particulier le PTFE, FEP ou PFA.

6. Dispositif de microréacteur selon la revendication 5, **caractérisé en ce que** l'épaisseur de la membrane (18) est comprise entre 100 µm - 500 µm.

7. Dispositif de microréacteur selon la revendication 1, **caractérisé en ce que** dans la zone de l'arrivée (6; 20) et/ou de l'évacuation (23) de la chambre de réaction (3), il est disposé respectivement une vanne (23b).

8. Dispositif de microréacteur selon la revendication 1, **caractérisé en ce que** les frittes (4, 5; 16) sont perméables aux liquides et imperméables à la résine polymère.

9. Dispositif de microréacteur selon la revendication 8, **caractérisé en ce que** les frittes (4, 5; 16) sont réalisées en matériaux polymères, en particulier PTFE (polytétrafluoréthylène), PFA (Perfluoroalkoxyalcan-copolymère) FEP (Tétrafluoréthylène-hexafluorpropylène-copolymère), PP (Polypropylène) présentant une porosité comprise entre 2 et 250 µm.

10. Dispositif de microréacteur selon la revendication 1, **caractérisé en ce que** le dispositif déplaçant la membrane (18) applique en alternance une pression de gaz sur la membrane (18) et applique le vide.

11. Dispositif de microréacteur selon la revendication 1, **caractérisé en ce qu'**au moins la chambre de réaction (3) se compose d'un matériau polymère, en particulier en PTFE, PFA, FEP et PP.

12. Dispositif de microréacteur selon la revendication 1, **caractérisé en ce que** la chambre de réaction (3) présente entre les deux frittes (4, 5) un volume compris entre 0,1 et 10 ml de préférence 0,2 à 2 ml.

13. Dispositif de microréacteur selon la revendication 1, **caractérisé en ce que** la chambre de réaction (3) est associée à un dispositif de chauffage.

14. Dispositif de microréacteur selon la revendication 13, **caractérisé en ce que** la chambre de réaction (3) est entourée d'une enveloppe thermoconductrice qui peut être chauffée par le dispositif de chauffage.

15. Dispositif de microréacteur selon la revendication 14, **caractérisé en ce que** l'enveloppe thermoconductrice est refroidissable par un dispositif de refroidissement.

16. Dispositif de microréacteur selon la revendication 1, **caractérisé en ce que** l'extrémité d'une forme conductrice de lumière est intégrée dans la paroi de la chambre de réaction (3).

17. Dispositif de microréacteur selon la revendication 1, **caractérisé en ce que** une fenêtre optique est intégrée dans la paroi de la chambre de réaction (3).

18. Système de microréacteur avec des dispositifs individuels de microréacteurs (1) tels que revendiqués dans l'une des revendications 1 à 17, qui sont disposés dans une forme de matrice de colonne n et de ligne m, n et m étant des valeurs de nombre entier.

19. Système de microréacteurs selon la revendication 18, **caractérisé en ce que** les dispositifs de microréacteur (1) sont incorporés dans une structure en plaque se composant de couches individuelles en plaques (14, 15, 22, 24, 27, 28) qui sont empilées perpendiculairement aux axes des chambres de réaction.

20. Système de microréacteurs selon la revendication 18, **caractérisé en ce que** sur le côté admission par rapport aux dispositifs de microréacteurs (1) au moins par ligne ou par colonne, il est prévu respectivement une amenée de gaz commune et/ou une amenée commune pour les solvants et/ou les agents réactifs.

21. Système de microréacteurs selon la revendication 18, **caractérisé en ce que** les membranes respectives (18) des dispositifs de microréacteurs individuels sont formées par une feuille de membrane disposée entre deux plaques.

22. Système de microréacteurs selon la revendication 18, **caractérisé en ce que** les vannes dans la zone de l'amenée et/ou de l'évacuation sont formées respectivement par deux plaques coulissantes qui présentent respectivement des ouvertures de vanne associées à un microréacteur, ouvertures qui libèrent un flux dans une position des plaques entre elles et bloquent un écoulement dans une autre position des deux plaques entre elles.

23. Système de microréacteurs selon la revendication 18, **caractérisé en ce que** les chambres de réaction (3) des différents dispositifs de microréacteurs (1) sont formées par des perçages dans une couche en forme de plaque (15).
